# EUROPEAN PATENT APPLICATION

(11) **EP 2 882 201 A1**
(43) Date of publication of application: **10.06.2015**
(21) Application number: 13306665.4
(22) Date of filing: 04.12.2013
(51) Int. Cl.: H04Q 9/02, G06F 11/32

(54) **Method of automatically and near-real-time managing data acquisition policies of remote data sources based upon manipulation of data representation during data analysis**

(71) Applicant: Thomson Licensing, 92130 Issy-les-Moulineaux (FR)
(72) Inventor: Van de Poel, Dirk, 2630 Aartselaar (BE); Goemaere, Patrick, 2960 Brecht (BE); Jonckheer, Kurt, 2000 Antwerpen (BE)
(74) Representative: Lindemann, Robert

(57) **Abstract**

A method of automatically controlling a remote first data source in response to analyzing data previously received from said first data source, includes receiving data from the remote first data source over a first network connection. The data is acquired under a first data acquisition policy, and stored for analysis. A user manipulates a visual representation of the stored data during analyzing the data. In response to manipulating the visual representation of the data, a second data acquisition policy is transmitted to the remote first data source over a second network connection. The second data acquisition policy is a version of the first data acquisition policy that is automatically modified in response to the manipulation of the visual representation of the stored data during analyzing the data.

## Description

### Field of the invention

The invention pertains to data analysis and remote data source management.

### Background

In the domain of remote device, application or website monitoring and analytics, data is collected according to a data policy which may either be fixed, e.g. in a firmware that cannot be changed easily, or manageable.

For example, a network connected device may autonomously collect and send data, e.g. configuration data, status data or data about usage statistics, to a server. The server may reside anywhere in a network, e.g. connected via the Internet or in the cloud.

Data policy in the context of this specification refers, inter alia, to the type of data that is sent, e.g. different operating parameters of a remote device, environmental conditions, and the like, at what time the data is sent, e.g. at fixed time intervals or event-triggered, e.g. when threshold values are exceeded.

In general data policies may be configurable through a management protocol, for example as stipulated in TR-232 (http://www.broadband-forum.org/technical/download/TR-232.pdf)
TR-232 describes how a TR-069 CWMP remote management server can discover device data policy capabilities and configure or manage the device to its needs.

Most data analysis systems process acquired data to derive more meaningful data, using aggregation, correlation and other processing operations, which is then presented to a human operator for analysis.

For example in the field of business intelligence, reporting is an importing aspect. Reporting can include visualization through web technologies-based user interfaces or generation of report documents.

Another important domain employing data acquisition policies is that of "big data", where in addition to the so-called batch processing new architectures are being defined to be able to process data in near-real-time. An exemplary architecture in this domain is the Lambda architecture proposed by Nathan Marz in his "Big Data" e-book. A high-level architectural concept is having two data processing layers: one for real-time processing and one for historical or batch processing. The former compensates for the long latency that the batch processing layer needs and calculates temporary real-time results that together with the historical processing results provide a complete view on the data.

Such real-time and batch processing operations are typically one-way operations which provide an aggregated view on the data which will typically be smaller in volume.

In these domains, there is a trend towards interactive data visualization where existing tools or frameworks allow user interaction with the processed data through a - typically - graphical user interface. (See e.g.: http://visual.ly/what-is-an-interactive-data-visualization)

However, the interactive data visualization only operates on previously processed and stored data. If a specific subset, e.g. in data sources, in time, in data points, etc., of the data raises the interest of the operator, e.g. for troubleshooting purposes, there may be insufficient detailed or too coarse-grained data for drawing a conclusion due to the respective data acquisition policies of the data sources whose data is analyzed.

Today, in order to provide more detailed data, i.e. data taken at higher sample rate, or at a higher resolution, the data acquisition policies of all or a subset of the involved data sources need to be manually changed, i.e. through human intervention, so as to provide more detailed data. At present, the process of getting more specific or other types of data will require a manual or complex process to change the data policies on the sources of data. Such manual change may involve using a plurality of different user interfaces, or applications.

Such process is generally time consuming and cumbersome, and may be considered wasted time in case, after detailed inspection, the resulting subset of data turns out not to hold interesting data.

For real-time analysis, e.g. troubleshooting or diagnostics, involving multiple iterations of changing the data policies and consulting the visualization before getting to the exact data needed, having to repeatedly go through such a complex and possibly lengthy process is not desirable and probably not feasible.

Also, in order to prevent too much data to be provided without any particular reason, the data acquisition policies manually changed before need to be manually returned to their default settings, or the previously valid settings, further increasing the manual operations required.

It is, therefore, desirable to provide a more convenient way of manipulating data sources, requiring less manual user interaction.

### Summary of the invention

In accordance with the invention the data policy of an IP connected device is changed for current and future data collection in response to a user accessing past collected data. I.e., the type, amount and time/incident upon which data is automatically sent is adjusted when a user accesses a data set that was collected in the past, or current data, and when the user performs operations on that past or current data. For example, when a user zooms into the previously collected data set for getting a more detailed view for a shorter period of time, the data sampling frequency at the connected devices is automatically and immediately increased for providing more data points at the new zoom level, and vice versa. The zooming may be on the time axis or "vertically", or both, i.e. the "resolution" may be adjusted on both axis, either individually or proportionally.

This is different from simply scaling a displayed data set based on a data set collected and stored using the highest possible resolution, as it causes the high resolution data to be collected only in response to the zooming, and only for future data to be collected.

In accordance with the invention also the type of data collected can be changed in response to manipulating the data representation. E.g. if a user selects or unselects specific data items, the collection of the newly selected data items is started and collected of un-selected data items is stopped. Such selection and un-selection is automatically effected depending on selection or un-selection of other data logically linked thereto.

A method in accordance with the invention automatically controls a remote first data source in response to analyzing data previously received from said first data source. First, data is received from the remote first data source over a first network connection. The data is acquired under a first data acquisition policy for the data source, and is stored for analysis. During analysis, the representation of the stored data is changed by a user, so as to allow for making conclusions, or getting a deeper insight into the operation or usage of the device, or the like. In response to manipulating the representation of the data, a second data acquisition policy is transmitted to the remote first data source over a second network connection. The second data acquisition policy is a version of the first data acquisition policy that is automatically modified in response to the manipulation of the representation of the stored data during analyzing the data.

In accordance with the invention the data acquisition policy determines one or more of the non-exclusive list including sampling rate, sampling resolution, data processing or precalculation and selection amongst a plurality of different types of data. The selection amongst a plurality of different types of data allows for, inter alia, enabling or disabling data acquisition from one or more of a plurality of sensors that are integrated in a remote device comprising the data source. The sensors include virtual sensors that collect data about the operation of the remote derived from digital quantities processed by the device as well as dedicated sensors, e.g. for measuring environmental data such as temperature, humidity, brightness, wavelength, radiation, energy consumption, volume flow, and the like. The dedicated sensors can also be placed in the remote device for providing further information about the operation of the device.

The data acquisition policy also sets the instants in time at which data is sent. For example, acquired data may be sent at preset time intervals or continuously. Acquired data may be sent as a stream of data, or in burst packets.

The data acquisition policy also determines if acquired data is to be sent only after a preset threshold value for a sensor is exceeded in either direction, or after an alarm signal is issued. The data transmitted in this context includes current data and can also include past data that was acquired in the remote device, but not sent.

Updating the data acquisition policy may be done using known remote management or communication methods, which are used for providing the data acquisition policies to the data source.

For example, a remote device connected over a network may publish its CPU usage every half hour to a data collection and processing system. The data processing system collects this data and through a user interface visualizes it as a histogram showing the CPU usage over time for a selected period, e.g. last year.

With interactive data visualization tools, a support engineer may be able to adjust the scale of the X axis, i.e. the time axis, to look at the history of the last month in more detail. While this interaction, i.e. adjustment of the X axis representation, takes place, remote management of the device data acquisition policy will automatically increase the frequency of publishing so that the interactive histogram will contain more fine grained information from that point onwards. Likewise, a zooming in on the Y-axis results in the data having a higher resolution in that axis. Adjusting the resolution can have a significant influence on the data traffic, and thus acquiring data at higher resolution may only be justified when really required for analysis.

Similarly, reducing the resolution can be used for adjusting a data acquisition and publishing policy to a mode that transmits data only in the form of a flag indicating that a threshold had been exceeded. This setting can be set automatically, e.g. when a data analyst selects a very low resolution, or expressly, when a data analyst selects only alarm or error reports to be displayed. In any case, the modification of the data as represented to the data analyst, or user, will influence the data acquisition policy of the data sources.

Generally, in accordance with the invention, manipulating the representation of the data includes showing more or less data samples or data points along any axis or corresponding scale of a two- or more-dimensional graphical representation of the data. Such operation is also referred to as zooming in or zooming out. In a typical zoomed-in representation fewer data samples are shown that are better individually discernible from each other. Accordingly, in a typical zoomed-out representation, more data samples are shown, which may not be discerned from each other. I.e., the samples may cover neighboring samples. One way of resolving the visual overflow of data is showing only every other sample, or, more generally, every n-th sample. Samples in zoomed-out representation may also be mathematically combined before they are graphically represented, e.g. by averaging, median operations, filtering, and the like.

Manipulating the representation of the data may also include selection of source of data based upon geographical region or any available device property, e.g. type, manufacturer and the like, performance, usage or behavior data.

In response to the manipulation of the representation of the data, a second data acquisition policy is generated, which is transmitted to the remote data source. The second data acquisition policy can be considered automatically and dynamically modified version of the first data acquisition policy. The modifications may pertain to one or more settings of the first data acquisition policy, and may result in sensors previously not used to be included in the data acquisition, or vice versa. The various settings depend on the sensors provided in the remote device. Sensors used in accordance with the invention have been discussed further above. However, it is noted that the types of sensors are not limited to the sensors listed further above, and that any kind of data producing entity can be used in the context of the present invention.

In an embodiment of the invention the network connection for receiving data and sending data acquisition policies is of the bi-directional type, where transmitting and receiving is effected over the same physical network connection. This includes different routing for received data and sent acquisition policies over a same-type network offering a plurality of different routes between transmitter and receiver.

In another embodiment, the acquired data is received over a different type of network than the one used for transmitting the data acquisition policies. For example, data may first be sent from the remote device over a low power one-way radio link to a radio link aggregator that collects data from multiple remote devices and then transmits the data to the final destination. The channel used for updating data acquisition policies may use an optical link, or a wired link. The connections used for data and policies may also be asymmetrical in terms of data rate, as required.

In accordance with one aspect of the invention, comprehensive data reporting interaction information from multiple data sources available at a data processing system is used for identifying which data sources are looked at or searched for.

In accordance with this aspect not only the data acquisition policy of the remote data source that is initially analyzed is modified, but also the data acquisition policies of other remote data sources. For example, data relating to fresh water consumption of a part of a city is analyzed. The first data source in this example is a central water distributor for a plurality of houses. The operator manipulates the representation of data showing the volume flow over time by zooming into the data, i.e. showing more samples - as available from stored data - over a smaller time period, and notices an unusual and persistent increase in the water flow through the central distributor. In response to zooming in, stored data from the plurality of houses connected to the central distributor is also retrieved from the data storage - available - and graphically represented. Further, the data acquisition policies of the central distributor and of the water meters in the plurality of houses are modified to provide more detailed data. In this example, the sampling interval is shortened, and the sampling resolution may be increased. Such automatic control of remote data sources may significantly speed up the process of identifying whether or not a water pipe is leaky, and if so, which pipe is concerned.

The previous example shows the usefulness of changing data acquisition policies of further data sources concurrently with the manipulation of data from a first data source. The first and further data sources are preferably logically linked, e.g. by sharing the same type of device, same purpose, providing data for the same region or location. The link may be obvious, or non-obvious. For example, it may not be useful to combine data on water consumption with data on the consumption of electrical energy in case a leakage in the water piping is to be found. However, if data on the use of warm water for specific times of day is to be analyzed, and it is known that the majority of houses use electric boilers for warm water supply, such combination may prove useful.

In an embodiment of the invention, the remote data source is automatically set to an initial or previous data acquisition policy after a predetermined or usersettable time has expired. This prevents from flooding the data storage with data acquired under an acquisition policy that is not appropriate under normal conditions.

In an embodiment of the invention, the interactivity information from multiple representations of the data, e.g. user interface accessed by multiple people, is combined into common data acquisition policies for data sources.

A data representation and manipulation device in accordance with the invention has a processor, a random access memory, a user interface and a display. The random access memory holds program instructions for carrying out the inventive method when read and executed by the processor. The display and the user interface enable a user to represent stored data and manipulate the representation as desired. The user interface includes one or more of touch screen, mouse, stylus, 3-D gestures captured by a camera or a capacitive sensor, keyboard and the like. The type of user interface depends on the type of data that is represented, the representation of the data, and the manipulation a user desires. Various types of user interfaces may be used concurrently or selectively. Stored data is provided to the device from a dedicated storage device that may be connected via a network, or that is provided in the device. The dedicated storage device preferably is of the non-volatile type and stores data in solid state memory, e.g. Flash-RAM, or on magnetic or optical data storage, or a combination thereof. The data representation and manipulation device further has a first and a second network connection, for communicating, directly or via further network components, with one or more data sources.

A control system for remote data sources includes a data representation and manipulation device that is adapted to perform the inventive method described further above. The system further includes at least one network connection for connecting the device to one or more data sources.

The data representation and manipulation device, also referred to as data processing platform, or data analysis system, is adapted to detect user interactions in connection with the reporting of the results of data processing and analysis. This aspect is implemented, e.g., through a web-based user interface, which can use any of the known data visualization frameworks as user interface. The user interactions with the data are tracked in real-time. As discussed above, one example of user interaction includes changing the scale of a graph axis to show more or less data, or zooming in on a range of data. The entity that actually handles data acquisition policy management, i.e. generates and transmits, the data acquisition policies, may be integrated in the processing platform, or may be located in a separate unit that is in communication with the processing platform. During the data processing and analytics, metadata is added to the results in order to be able to create a link between the analytics results and the source of data for the specific results. Adding metadata allows for identifying which data was the source for any intermediate or final result of the analysis, irrespective of the kind and number of data processing steps performed on the data. In accordance with the invention the metadata is stored together with the results of data processing and for each result contain a reference to which data was used as source in the processing, e.g. which parameter or data item originates from which remote data source.

The method and system in accordance with the invention can be invoked for example by a helpdesk, or a service analyzing data over long periods of time. The invention eliminates or greatly reduces the need to manually manage and set the data acquisition policies for the remote data sources for obtaining the desired data at a rate and in a quality as required for analysis, thereby reducing time and effort for a user and providing faster and more efficient access to data.

### Brief description of the drawings

The invention will be described in greater detail with reference to the drawings, in which
- Fig. 1: shows a flow diagram in accordance with an aspect of the inventive method,
- Fig. 2: shows the message and data flow in accordance with an aspect of the inventive method,
- Fig. 3: shows an exemplary schematic overview of a system in accordance with the invention,
- Fig. 4: shows a first exemplary data representation according to the inventive method,
- Fig. 5: shows a second exemplary data representation according to the inventive method, and
- Fig. 6: represents an exemplary schematic block diagram of a variant of a system in accordance with the invention.

### Detailed description of embodiments of the invention

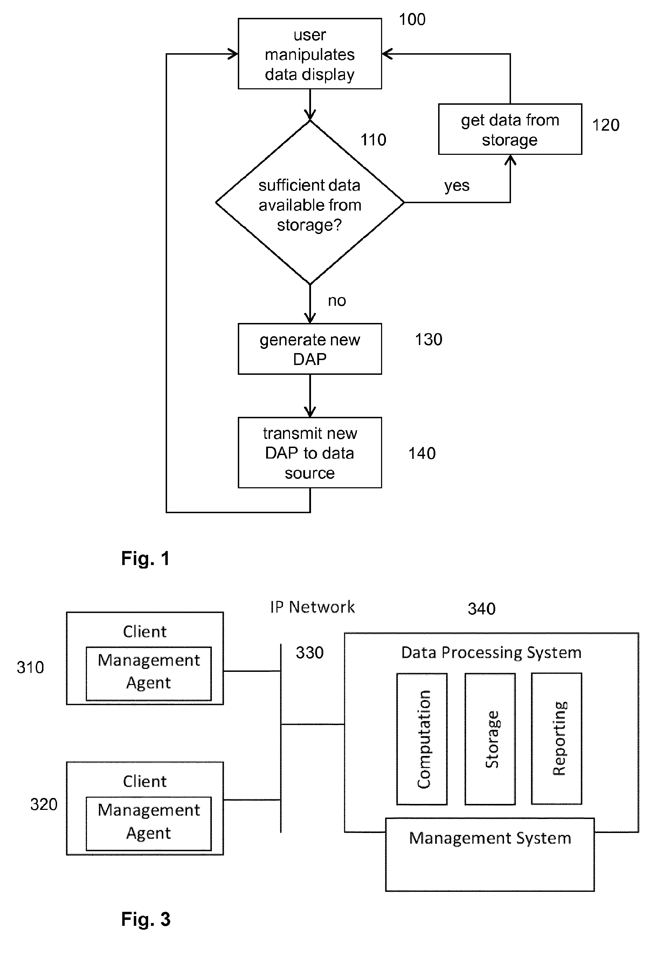

Figure 1 shows a flow diagram in accordance with an aspect of the inventive method. In step 100 a user manipulates data displayed, or represented, on a display. Manipulation includes zooming, selecting or un-selecting, and the like, of data items and types. In step 110 the method checks if data in accordance with the manipulation is available from a data storage. If so, data is retrieved from the data storage, step 120, and the user can continue data display manipulation as desired. If sufficient data is not available from the data storage, a new data acquisition policy (DAP) is generated, which, when executed, provides the desired data, step 130. In step 140 the new DAP is transmitted to the remote data source, which provides data accordingly (not shown).

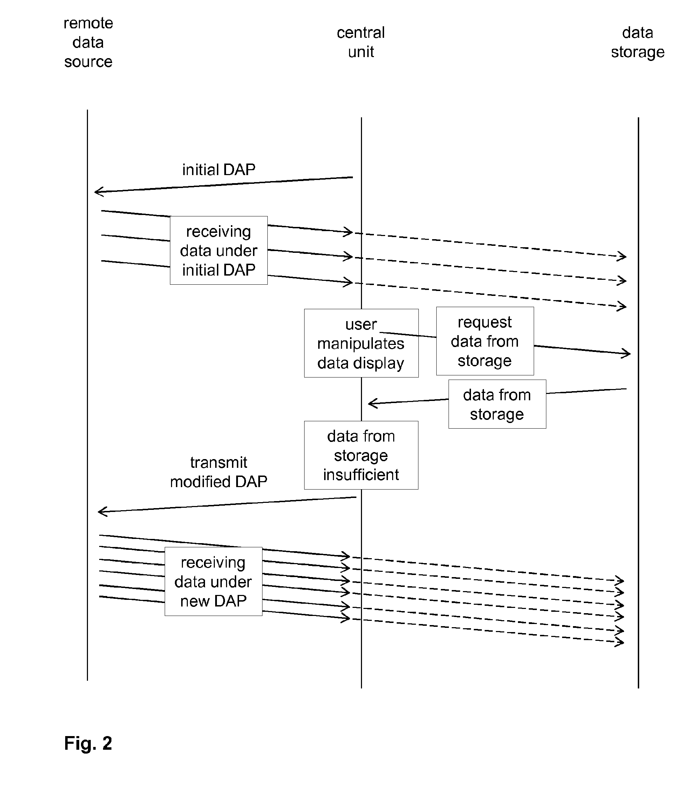

Figure 2 represents the message and data flow in accordance with an aspect of the inventive method. A central unit provides an initial DAP to the remote data source. This message flow can also be omitted, in case the remote data source is provided with a preset or a default DAP upon deployment. During normal operation the remote data source transmits data under the initial DAP, or current DAP, for that matter, to the central unit. The data may be further transmitted to a data storage for later retrieval. Once a user, or data analyst, displays and manipulates the data on a display, for analyzing the data, additional data may be requested from the data storage, for example when zooming into the data, or when adding further data types or items previously not displayed. If such data is available, it is sent to the central unit. If data of the desired kind and quality is not available from the data storage the central unit generates and transmits a modified DAP to the remote data source so as to cause the desired data to be acquired in the desired quality under the new DAP. The remote data source, in response to receiving the modified DAP, transmits the desired data. In the figure the consequences of the modification of the DAP are indicated by more data items being sent to the central unit and/or to the data storage.

Figure 3 shows an exemplary schematic overview of a system in accordance with the invention. A first, 310, and a second, 320, remote data source are operatively connected to a network, 330. The remote data sources are also labeled clients, and further include a management agent. The management agent receives control messages from a data processing system, 340. The control messages include DAPs for controlling the data acquisition in the remote data sources. Data processing system 340 is likewise operatively connected to network 330. Data processing system 340 includes a computation unit, for processing data, and further includes a data storage and a reporting unit. The data storage can also be implemented by a separate device (not shown), which is in communication with the data processing system. A reporting unit is also provided in the data processing system, for processing the data for generating reports, either automatically or in accordance with user inputs. Further, a management system is provided in the data processing system, which generates DAPs for the remote data sources. The management system can also be implemented in a separate device (not shown), which is in communication with the data processing system.

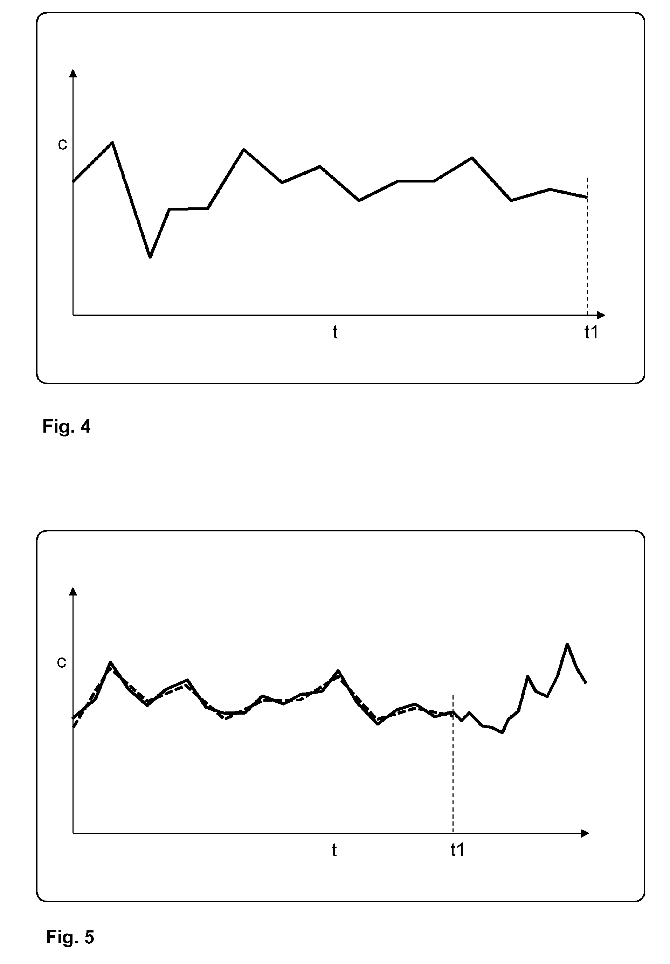

Figure 4 shows a first exemplary data representation according to the inventive method. The figure shows samples of data having a magnitude c over time t. At time instant t1 a user requests to display more detailed data on the screen, i.e. manipulates the way the data is displayed. The request is handled in accordance with the method as described further above, and involving method steps and message exchanges as shown in figures 1 and 2. The result of the manipulation is shown in figure 5. More detailed data for the time prior to time instant t1 is retrieved from the data storage (not shown). The greater detail in this example is found in a higher number of samples, and in a higher resolution. This is visualized in the figure through the slightly different sample values c and twice the number of sample values prior to the time instant t1. For reference a part of the curve of figure 4 is also shown in figure 5 as a dashed line. From the time instant t1 the four times the number of samples is displayed. While twice the number of samples were available from the data storage for the time before time instant t1, the user request that targeted having four times the samples displayed on the screen required changing the DAP for the remote data source. Such change was initiated and effected automatically in accordance with the in invention as described before. Once the change has taken effect, and data from the remote data source is received under the modified DAP, the more detailed data is available for display and analysis.

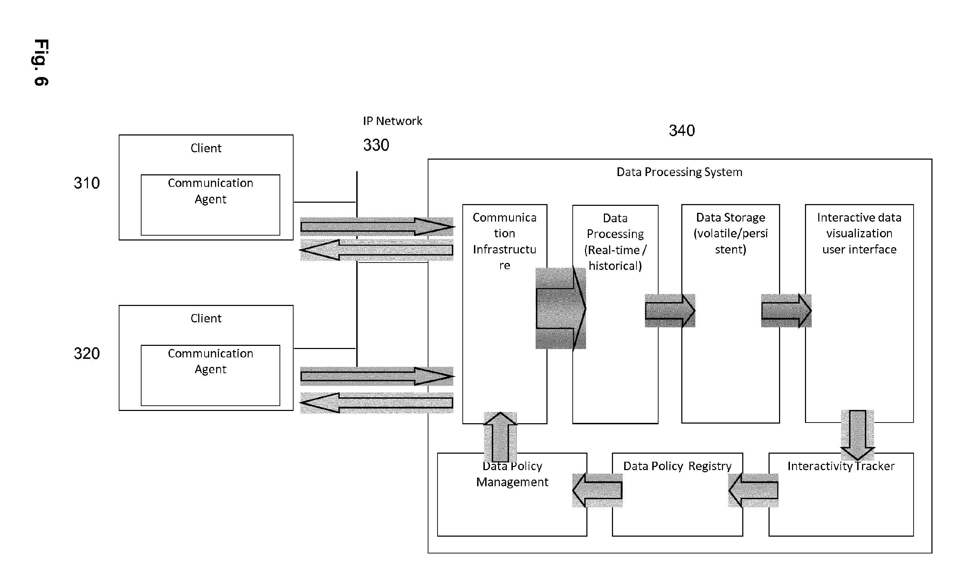

Fig. 6 represents a variant of an exemplary schematic block diagram of a system in accordance with the invention. This variant is more related to a "big-data" implementation, which has generally been introduced further above. In the exemplary system remote clients 310, 320 are connected to a data processing system 340 via a network 330. This substantially corresponds to the block diagram of figure 3. Arrows across network 330 indicate that data is flowing bidirectionally over the network, e.g. data from the remote client to the data processing system and control commands from the processing system to the remote clients. Data originating at the remote clients is sent, via network 330, to the communication infrastructure of data processing system 340. The data is forwarded to a data processing section of the data processing system. The size of the arrow symbolizes the amount of data that is forwarded. After the data processing is done the results are forwarded to a data storage, for immediate or later reference. The size of the corresponding arrow shows that the actual amount of data after processing is reduced. It goes without saying that the information content of the data is not necessarily reduced by the processing. Rather, the information is condensed or shaped for improved interpretability - automatic or human. From the data storage recent or historic data is provided to an interactive data visualization section that is responsive to control input of a user. The user's interaction during data manipulation are tracked in an interactivity tracker, which provides control instructions resulting from the interactions to the data policy registry. The control instructions are for example values and settings for the data policy registry section, or commands for the data policy registry, which are accordingly converted to corresponding values and settings in the data policy registry section. A data policy management section, in response to a modified data policy, provides corresponding control commands for one or more remote clients to the data processing system's communication infrastructure, which ultimately transmits the data policies to the remote clients.

## Claims

1. Method of automatically controlling a remote first data source in response to analyzing data previously received from said first data source, including:
- receiving data from the remote first data source over a first network connection, wherein the data is acquired under a first data acquisition policy, and storing the data for analysis;
- manipulating a visual representation of the stored data during analyzing the data;
- in response to manipulating the visual representation of the data, transmitting a second data acquisition policy to the remote first data source over a second network connection, wherein the second data acquisition policy is a version of the first data acquisition policy that is automatically modified in response to the manipulation of the visual representation of the stored data during analyzing the data.

2. The method of claim 1, wherein the data acquisition policy determines one or more of the non-exclusive list including sampling rate, sampling resolution, and selection amongst a plurality of different types of data.

3. The method of claim 1 or 2, wherein the data is received continuously or at intervals, streamed or in burst packets.

4. The method of any one of claims 1 to 3, wherein the first and the second network connection are connections over a same physical bi-directional network.

5. The method of any one of the preceding claims, wherein manipulating the visual representation includes zooming into data points represented in a two- or more-dimensional graphical representation of the data, or zooming out.

6. The method of any one of the preceding claims, wherein under the second data acquisition policy that is automatically generated by modifying the first data acquisition policy in response to the manipulation of the visual representation of the stored data, the sampling rate, the sampling resolution, or the type of data to be acquired is changed for the remote first data source.

7. The method of any one or more of the preceding claims, wherein in response to manipulating the visual representation of stored data from the remote first data source, in addition to modifying the data acquisition policy of the remote first data source, the data acquisition policy of a remote second data source is automatically modified.

8. The method of claim 7, wherein the remote second data source is logically linked with the remote first data source by sharing the same type, purpose, and/or location.

9. The method of any one or more of the preceding claims, further including, after a predetermined time of absence of manipulation visually represented data, transmitting an initial data acquisition policy to the remote first and/or second data source.

10. Data representation and manipulation device having a processor, a random access memory, display, a user interface, at least a first network connection, the data representation and manipulation device further being in communication with a data storage storing previously acquired data from remote data sources, wherein the memory stores instructions that, when executed, cause the device to perform the method of any one of claims 1 to 9.

11. Remote data source control system having a data representation and manipulating device of claim 10 and one or more remote data sources that acquire and transmit data in accordance with a modifiable data acquisition policy.
